**Europäisches Patentamt**

**European Patent Office**

**Office européen des brevets**

(11) Veröffentlichungsnummer: **0 320 621 B1**

# EUROPÄISCHE PATENTSCHRIFT

(45) Veröffentlichungstag der Patentschrift:
**05.06.91 Patentblatt 91/23**

(21) Anmeldenummer: **88118743.9**

(22) Anmeldetag: **10.11.88**

(51) Int. Cl.⁵: **F16H 25/22**

(54) Vorrichtung zur Umwandlung einer Drehbewegung in eine Axialbewegung.

(30) Priorität: **17.11.87 DE 3739059**

(43) Veröffentlichungstag der Anmeldung:
**21.06.89 Patentblatt 89/25**

(45) Bekanntmachung des Hinweises auf die
Patenterteilung:
**05.06.91 Patentblatt 91/23**

(84) Benannte Vertragsstaaten:
**AT CH DE FR GB IT LI NL SE**

(56) Entgegenhaltungen:
**DE-A- 1 962 872**
**DE-A- 2 065 442**
**DE-A- 2 807 952**
**DE-A- 2 838 329**
**DE-C- 2 721 977**
**DE-U- 8 513 093**

(73) Patentinhaber: **Deutsche Forschungsanstalt
für Luft- und Raumfahrt e.V.
Linder Höhe Postfach 90 60 58
W-5000 Köln 90 (DE)**

(72) Erfinder: **Dietrich, Johannes, Dipl.-Ing.
Am Buchenstock 30
W-8031 Gilching (DE)**
Erfinder: **Gombert, Bernd, Dipl.-Ing.
Oskar-von-Miller-Strasse 12
W-8080 Fürstenfeldbruck (DE)**

(74) Vertreter: **von Kirschbaum, Albrecht, Dipl.-Ing.
Hermann-Ehlers-Strasse 21a
W-8034 Germering (DE)**

**Beschreibung**

Die Erfindung betrifft eine Vorrichtung zur Umwandlung einer Drehbewegung in eine Axialbewegung und umgekehrt, nach dem Oberbegriff des Anspruchs 1 oder 4.

Planetenrollen-Spindeln, wie sie beispielsweise in DE-A-20 65 442 und DE-A-28 38 329 dargestellt und beschrieben sind, arbeiten mit verschiedenen Ausführungsformen der Komponenten Spindel, Rollen und Mutter. Auf die Komponenten können beispielsweise Gewinde oder Rillen geschnitten sein. Grundsätzlich greift aber die Profilierung der Rollen sowohl in die spindelseitige als auch in die mutterseitige Profilierung ein, um einen axialen Kraftfluß herzustellen. Daher müssen auf allen drei Komponenten zueinander passende Rillen oder Gewindegänge vorhanden sein. Ebenso können sowohl Muttern als auch Rollen nur mit Rillen versehen sein, damit die Rollen keine Axialbewegung ausführen, während die Spindel mit einem mehrgängigen Gewinde ausgeführt ist, dessen Gangzahl der Rollenzahl entspricht bzw. ein Vielfaches davon ist, wie beispielsweise in DE-A-28 07 952 beschrieben ist.

Ferner ist aus DE-A-1 962 872 die Vorrichtung zur Umwandlung einer Dreh- in eine Axialbewegung bekannt, die eine Gewindespindel mit einem verhältnismäßig groben Gewinde, eine diese Spindel umgebende Mutter mit einer groben Rillenprofilierung und dazwischen angeordnete Rollkörper aufweist. Die Rollkörper weisen zwei unterschiedliche Profilierungen auf, nämlich eine zu dem groben Gewinde auf der Spindel passende Rillenprofilierung und eine andere, zu den groben Rillen der Mutter passende Profilierung. Es lassen sich also sehr einfach Rollspindeln mit größerer Steigung herstellen.

Für Rollspindeln mit einer sehr kleinen Steigung, welche kleiner als 0,3 mm/Umd ist, würde dies jedoch bei sinnvoller Rollenzahl, welche bei mehr als drei Rollen liegt, zu so feinen Gewindeprofilen führen, daß deren Fertigung kaum mehr möglich ist.

Die beispielsweise bei Roboteranwendungen immer wieder erhobene Forderung nach einem Spindelsystem mit sehr kleiner Steigung läßt sich somit mit den zahlreichen, bekannten Konstruktionen nicht oder allenfalls nur mit einem übertrieben großen Aufwand oder aber mit Einbußen hinsichtlich der Präzision, der Laufruhe und Lebensdauer erfüllen.

Ziel der Erfindung ist es daher, eine möglichst reibungsarme Spindelanordnung zu entwickeln, mit welcher bei hohem Kraftgewinn eine schnelle Drehbewegung unmittelbar in eine langsame Axialbewegung umsetzbar ist. Gemäß der Erfindung ist dies bei einer Vorrichtung zur Umwandlung einer Drehbewegung in eine Axialbewegung und umgekehrt, nach dem Oberbegriff des Anspruchs 1 oder 4 durch die Merkmale im kennzeichnenden Teil des Anspruchs 1 bzw. 4 erreicht. Vorteilhafte Weiterbildungen der Erfindung sind Gegenstand der Unteransprüche.

Um das Ziel der Erfindung zu erreichen, müssen beispielsweise Spindelanordnungen mit einer sehr kleinen Gewindesteigung verwendet werden. Ferner ist eine besonders kleine und gedrungene Bauweise dann Bedingung und Voraussetzung, wenn eine Anwendung im feinwerktechnischen Bereich vorgesehen ist, so beispielsweise für einen elektrisch betriebenen, hinsichtlich Kraft und Position regelbaren Robotergreifer. Bei Verwirklichung einer sehr kleinen Steigung ergibt sich aus dem großen Untersetzungsverhältnis eine große Kraft.

Auf planetenartig zwischen einer Mutter und einer Spindel angeordneten Rollkörpern sind zwei verschiedene Profilierungen aufgebracht. Hierbei stellt die eine Profilierung den axialen Kraftschluß zur Spindel her, während die andere Profilierung den Kraftschluß zur Mutter bewirkt. Im folgenden werden diese beiden, unterschiedlichen Profilierungen als mutterseitige bzw. spindelseitige Profilierung bezeichnet.

Die mutterseitige Profilierung der Rollkörper und die Profilierung in der Mutter selbst weisen im Vergleich zur spindelseitigen Profilierung eine viel größere Teilung mit vorzugsweise V-förmigem Querschnitt auf. Um bei einer mit vertretbarem Aufwand herstellbaren Schnittiefe sehr kleine Steigungen zu erhalten, sind die spindelseitige Rillenprofilierung der Roll-oder Wälzkörper und die schraubenlinienförmige Profilierung auf der Spindel selbst folgendermaßen ausgebildet. Auf der Spindel ist ein- oder mehrgängiges Gewinde aufgebracht. Die Planetenrollen weisen eine entsprechend dem Spindelgewinde ausgebildete Teilung in Form von nebeneinander angeordneten Rillen auf, wobei diese einen exakten Eingriff in die Gewindesteigung der Spindel gewährleisten. Damit alle Planetenrollen exakt in die Gewindesteigung der Spindel eingreifen, sind die spindelseitigen Rillen der einzelnen Planetenrollen von Rolle zu Rolle mit einem bestimmten Teilungsversatz angeordnet, und erzeugen dadurch eine von Rolle zu Rolle punktförmige Ausbildung einer konstanten Gewindesteigung.

Die Planetenrollen führen somit aufgrund der erzeugten Teilungsverschiebung zwischen benachbarten Planetenrollen und dem dadurch fest vorgegebenen Abstand zueinander nur jeweils eine Drehbewegung relativ um die Spindel aus, wobei sie durch die Gewindeprofilierung der Spindel getrieben sind. Daher ist im besonderen kein Führungskäfig bzw. eine Rollenzwangs- oder -rückführung erforderlich.

Die Steigung S einer solchen Anordnung errechnet sich aus der Spindelsteigung Ss, dem Radius der Spindel Rs sowie dem Radius Rr der Planetenrollen überschlagsmäßig entsprechend der folgenden Gleichung:

$$S = Ss \left(1 - Rs/(2Rs + 2Rr)\right) \quad (1)$$

Eine weitere Ausführungsform weist im wesentlichen den gleichen Aufbau auf, wie er oben beschrieben ist; jedoch werden, umgekehrt wie oben beschrieben, die Planetenrollen mit einem Gewinde positiver oder negativer Steigung, und analog dem Gedanken der Erfindung, die Spindel mit Rillen versehen. Die mutterseitigen Führungsrillen der Rollen und die entsprechenden Führungsrillen der Mutter bleiben, wie oben beschrieben, bestehen. Es wird dann jedoch ein Käfig erforderlich, der die Planetenrollen winkelmäßig zueinander auf Distanz hält.

Die Steigung S einer solchen Anordnung errechnet sich nach der nachstehend wiedergegebenen Gleichung

$$S = Ss(1 - Rs/(2Rs + 2Rr)) + Sr.Rs/Rr \quad (2)$$

Bei einer solchen Anordnung lassen sich durch Variieren der Rollensteigung Sr und der Radien praktisch beliebige Steigungen ja sogar negative Steigungen realisieren, ohne daß dabei die Spindelsteigung geändert oder negativ gemacht werden müßte.

Nachfolgend wird anhand einer bevorzugten Ausführungsform eine besonders vorteilhafte, äußerst reibungsarme Ausführungsform für sehr niedrige Steigungen beschrieben. Es zeigen :

Fig. 1 eine axiale Schnittansicht einer bevorzugten Ausführungsform der erfindungsgemäßen Vorrichtung, und

Fig. 2 eine Schnittansicht entlang der Linie II-II in Fig. 1, und

Fig. 3a und Fig. 3b eine Art Abwicklung einer bevorzugten Ausführungsform mit sechs Planetenrollen, wobei in Fig. 3a eine Draufsicht und in Fig. 3b eine Schnittansicht wiedergegeben sind, und aus letzterer ein von Rolle zu Rolle vorgesehener Teilungsversatz der spindelseitigen Profilierung zu entnehmen ist.

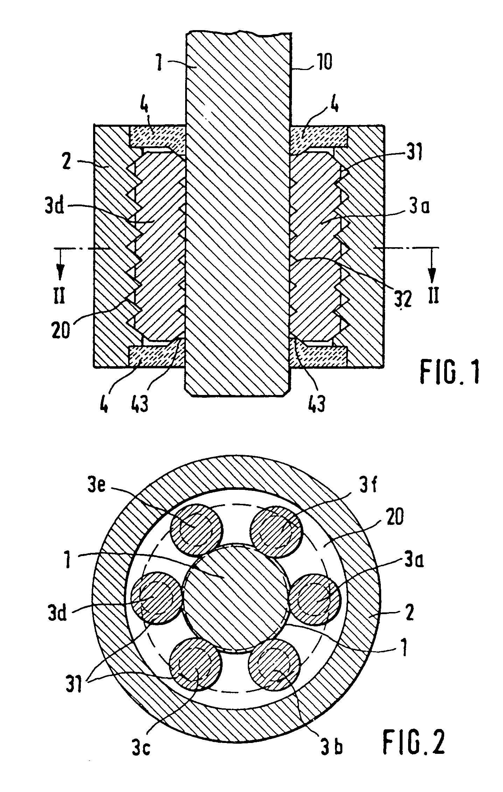

Sowohl in der axialen Schnittansicht der Fig. 1 als auch in der Schnittansicht in Fig. 2 entlang der Linie II-II in Fig. 1 ist mittig eine Spindel 1 bzw. das Ende einer als Spindel 1 ausgebildeten Welle, beispielsweise der Welle eines Antriebmotors dargestellt. Auf einer derartigen Spindel 1 ist ein eingängiges Feingewinde 10 aufgebracht, das beispielsweise eine Steigung S von 0,3 bis 0,25 mm oder weniger hat.

Um die Spindel 1 herum sind mehrere, in der vorliegenden Ausführungsform sechs Rollen 3a bis 3f planetenartig angeordnet, wie besonders deutlich aus der Schnittansicht der Fig. 2 zu ersehen ist. Auf den sogenannten Planetenrollen 3a bis 3f ist in vorgegebenen Abschnitten ein entsprechend fein ausgebildetes Rillenprofil 31 aus nebeneinander angeordneten und parallel zueinander verlaufenden Rillen bestimmter Teilung aufgebracht, so daß durch diese konstante Rillenteilung und deren Rillentiefe ein exakter Eingriff in das Gewinde 10 mit kleiner Steigung auf der Spindel 1 gewährleistet ist.

Ferner sind auf den einzelnen Planetenrollen 3a bis 3f zwischen den Abschnitten mit der spindelseitigen Rillenprofilierung grobe Führungsrillen 32 mit V-förmigem Querschnitt ausgebildet ; die Teilung dieser Führungsrillen ist exakt die gleiche, wie diejenige von dazu negativen Führungsrillen 20, mit V-förmigem Querschnitt, welche im Inneren der Spindelmutter 2 ausgebildet sind.

Damit alle im vorliegenden Ausführungsbeispiel sechs Planetenrollen 3 sowohl in die mutterseitige Rillenprofilierung bestimmter Teilung im Inneren der Mutter 2, als auch in die Spindel 1 mit kleiner Gewindesteigung, exakt und zuverlässig eingreifen, ist die spindelseitige Rillenprofilierung 31 auf jeder der Planetenrollen 3 mit einer von Rolle zu Rolle konstanten, je nach zu erreichender Gesamtsteigung, fest vorgegebener Teilverschiebung angeordnet.

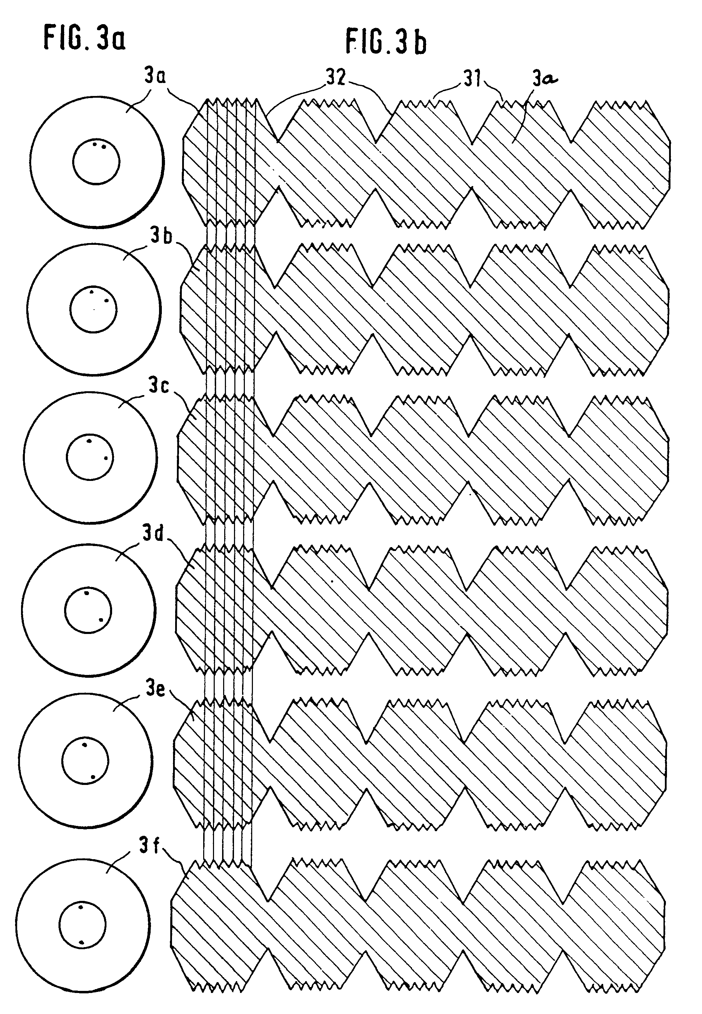

Bei der in Fig. 3a und 3b wiedergegebenen bevorzugten Ausführungsform mit sechs Rollen 3a bis 3f ist aus der Schnittdarstellung der einzelnen Rollen zu entnehmen, daß die erste feine Rille in den einzelnen mit einer Feinprofilierung versehenen Abschnitten von Rolle zu Rolle jeweils eine Teilungsverschiebung bzw. einen Teilungsversatz aufweist. Bei einer Steigung des Feingewindes auf der Spindel von 0,3 und einer dementsprechenden Teilung der Rillensteigung würde dies einer Teilungsverschiebung bzw. einem -versatz von Rolle zu Rolle von 0.05 mm oder, in Grad ausgedrückt, von jeweils 60 Winkelgrad bedeuten. Da bei einer derart geringen Gewindesteigung und der dadurch bedingten geringen Rillentiefe ein solcher Versatz mit dem bloßen Auge auf keinen Fall feststellbar ist, sind die Rollen 3a bis 3f, bzw. deren Einbau-Reihenfolge, wie aus den Draufsichten in Fig. 3a zu ersehen ist, beispielsweise durch in unterschiedlichem Abstand voneinander angeordnete Punkte gekennzeichnet.

Das bedeutet, analog aufgebaute Rollen 3a bis 3f weisen jeweils bezüglich der in den vorgesehenen Zwischenabschnitten auf ihnen ausgebildeten, feinen Profilierung 31 jeweils einen unterschiedlichen Teilungsversatz auf, und müssen daher in einer ganz bestimmten Reihenfolge angeordnet werden, welche beispielsweise aus der Kennzeichnung an der Stirnseite der einzelnen Rollen 3a bis 3f zu ersehen ist.

So liegen beispielsweise 180 Winkelgrad zwischen dem Versatz des Feingewindes 31 auf der in Fig. 1 oder 2 rechts angeordneten Rolle 3a, welche der obersten Rolle in Fig. 3a und 3b entsprechen soll, und dem entsprechenden Teilungsversatz der entsprechenden ersten Rille auf der in der Schnittansicht in der Fig. 1 oder 2 linken Rolle 3d, welcher der – von oben an gezählt – vierten Rolle in Fig. 3a und 3b entspricht, da, wie bereits mehrfach erwähnt, bei der in den Figuren dargestellten Ausführungsform insgesamt sechs Rollen 3 vorgesehen sind.

Oder anders ausgedrückt, der von Rolle zu Rolle unterschiedliche Teilungsversatz der jeweils ersten Rille der auf den Rollen 3a bis 3f aufgebrachten Profilierung 31 ergibt sich, wenn bei einer bestimmten Rolle mit dem Zählen begonnen wird, entsprechend dem Produkt aus (Nummer der gerade interessierenden Rolle −1) × 360°/Gesamtrollenanzahl.

Die in Fig. 1 dargestellte Schnittansicht der erfindungsgemäßen Vorrichtung weist als Staubschutz und als Halterung und Sicherung für die Rollen oder Walzen 3 oben und unten je weils noch eine Abdeckung 4 auf, welche zum Inneren der Anordnung hin jeweils Ansätze 43 aufweisen, deren Anfasung jeweils der Steigung der groben Rillen 32 am Außenumfang der Rollen oder Walzen 3 entsprechen.

## Ansprüche

1. Vorrichtung zur Umwandlung einer Drehbewegung in eine Axialbewegung, mit einer Gewindespindel (1), einer diese umgebenden Mutter (2) und einer Anzahl dazwischen angeordneter Wälz- oder Rollkörper (3) mit unterschiedlichen Profilierungen, nämlich einer zum Gewinde der Spindel passenden Rillenprofilierung (31) und einer anderen zu den Rillen der Mutter (2) passenden Profilierung, dadurch **gekennzeichnet**, daß das Gewinde der Spindel ein ein- oder mehrgängiges Feingewinde (10) ist, daß die Profilierung der Mutter (2) in verhältnismäßig groben Rillen (20) ausgeführt ist, und daß die Profilierungen der Wälz- oder Rollkörper (3) einander überlappen und in einander abwechselnden Abschnitten ausgebildet sind.

2. Vorrichtung nach Anspruch 1, dadurch **gekennzeichnet**, daß die die Profilierung der Mutter (2) bildenden, groben Rillen (20) als im Querschnitt V-förmige nebeneinander verlaufende Rillen (20) ausgeführt sind, daß die Spindel (1) ein eingängiges Feingewinde (10) hat, und daß die zum Gewinde der Spindel (1) passende Profilierung der Wälz- oder Rollkörper (3) jeweils eine bestimmte Anzahl feiner, in das eingängige Feingewinde (10) der Spindel (1) passende Rillen (31) aufweist.

3. Vorrichtung nach Anspruch 1 und 2, dadurch **gekennzeichnet**, daß zur exakten Fixierung der Position der einzelnen Rollkörper die groben Rillen (32) relativ zu der bestimmten Anzahl feiner Rillen (31) jedes der Rollkörper (3) einen von Rollkörper zu Rollkörper unterschiedlichen, aber entsprechend der Anzahl der verwendeten Rollkörper fest vorgegebenen Versatz aufweisen, so daß die hinsichtlich ihres Teilungsversatzes unterschiedlichen Rollkörper (3) in einer ganz bestimmten Reihenfolge zwischen der Gewindespindel (1) und der sie teilweise umgebenden Mutter (2) angeordnet sind.

4. Vorrichtung zur Umwandlung einer Dreh- in eine Axialbewegung, mit einer Spindel mit Außenprofilierung, einer diese Spindel umgebenden Mutter (2) mit Rillenprofilierung und einer Anzahl dazwischen angeordneter Wälz- oder Rollkörper (3) mit unterschiedlichen Profilierungen, nämlich einer zur Profilierung der Spindel passenden Profilierung und einer anderen, zu den Rillen der Mutter (2) passenden Profilierung dadurch **gekennzeichnet**, daß die Profilierung auf der Spindel in Form von feinen Rillen ausgeführt ist, daß die Profilierung der Mutter (2) in verhältnismäßig groben Rillen (20) ausgeführt ist, daß die Profilierung der Wälz- oder Rollkörper (3) einander überlappen und ineinander abwechselnden Abschnitten ausgebildet sind, wobei die Abschnitt mit der zu den feinen Rillen der Spindel passenden Profilierung ein Feingewinde mit positiver oder negativer Steigung aufweisenn, und daß zur Distanzeinhaltung zwischen den Wälz- oder Rollkörpern (3) ein Käfig vorgesehen ist.

## Claims

1. A device for converting rotary movement into axial movement, comprising a threaded spindle (1), a nut (2) surrounding said spindle, and a plurality of interposed rollers or roll bodies (3) having different profile, namely a groove profile (31) matching the thread of said spindle (1) and an other profile matching the grooves in nut (2), characterized in that the thread of the spindle (1) is a simple multiple fine thread (10) ; nut (2) is provided with a relatively coarse groove profile (20) ; and the profiles of the rollers or roll bodies (3) overlap each other and are formed in alternating sections.

2. The device according to claim 1, wherein the coarse grooves (20) constituting the profile of the nut (2) are formed as grooves (20) running adjacent to each other and having a V-shaped cross-section ; the spindle (1) is provided with a simple fine thread (10) ; and each profiled section of the rollers or roll bodies (3) matching the thread of spindle (1) comprises a certain number of fine grooves (31) fitting into the simple fine thread (10) of the spindle (1).

3. The device according to claim 1 or 2, wherein, for accurately fixing the position of the individual rollers, the coarse grooves (32) relative to the specific number of fine grooves (31) on each of the rollers (3) comprise a given shift in pitch that differs from roller to roller but corresponds to the number of rollers used, so that the rollers (3) differing with respect to their shift in pitch are arranged in a specific sequence between the threaded spindle (1) and the nut (3) surrounding said spindle.

4. A device for converting rotary movement into axial movement, comprising a spindle (1) having an exterior profile, a nut (2) surrounding said spindle and having a groove profile, and a plurality of interposed rollers or roll bodies (3) having different profiles, namely one profile matching that of the spindle and another profile matching the grooves of the nut ; characterized in that the profile of the spindle (1) is formed by fine grooves ; the profile of the nut (2) is formed by relatively coarse grooves (20) ; the profiles of the rollers or roll bodies (3) overlap each other and are formed in alternating sections, the section having a profile matching the fine grooves of spindle (1) being provided with a fine thread of positive or negative pitch ; and a cage is provided for evenly spacing the rollers or roll bodies (3).

**Revendications**

1. Dispositif pour convertir un mouvement rotatif en un mouvement axial, comprenant une broche filetée (1), un écrou (2) entourant cette dernière et un certain nombre de corps de rouleaux de rouleaux ou de cylindres (3) disposés entre eux, à profilages différents, à savoir un profilage à rainures (31) adapté au filetage de la broche et un autre profilage adapté aux rainures de l'écrou (2), caractérisé en ce que le filetage de la broche est un filetage fin (10) à pas simple ou multiple, en ce que le profilage de l'écrou (2) est constitué par des rainures (20) relativement grossière et en ce que les profilages des corps de rouleaux ou de cylindres (3) se chevauchent les uns les autres et sont constitués dans des sections alternant les unes avec les autres.

2. Dispositif selon la revendication 1, caractérisé en ce que les rainures grossières (20) formant le profilage de l'écrou (2) sont constituées sous forme de rainures (20) à section en V et disposées les unes contre les autres, en ce que la broche (1) comprend un filetage fin (10) à pas simple, et en ce que le profilage des corps de rouleaux ou de cylindres (3) qui est adapté au filetage de la broche (1) comprend respectivement un nombre déterminé de rainures fines (31) adaptées au filetage fin à pas simple (10) de la broche (1).

3. Dispositif selon la revendication 1 ou 2, caractérisé en ce que pour obtenir une fixation précise de la position des corps de rouleaux individuels, les rainures grossières (32) présentent par rapport au nombre déterminé de rainures fines (31) de chacun des corps de rouleaux (3) un décalage fixe et prédéterminé, différent mais correspondant au nombre de corps de rouleaux utilisés, de corps de rouleaux à corps de rouleaux, de manière que les différents corps de rouleaux (3) soient disposés, concernant le décalage de leur division, selon une succession bien déterminée entre la broche filetée (1) et l'écrou (2) qui l'entoure partiellement.

4. Dispositif pour convertir un mouvement rotatif en un mouvement axial, comprenant une broche à profilage externe, un écrou (2) à profilage à rainures entourant cette broche et un certain nombre de corps de rouleaux ou cylindres (3) disposés entre eux et à profilages différents, à savoir un profilage adapté au profilage de la broche et un autre profilage adapté aux rainures de l'écrou (2), caractérisé en ce que le profilage est constitué sur la broche sous forme de rainures fines, en ce que le profilage de l'écrou (2) est constitué sous forme de rainures relativement grossières (20), en ce que les profilages des corps de rouleaux ou cylindres (3) sont constitués par des sections discontinues se chevauchant les uns les autres, la section comprenant un filetage fin en direction du profilage adapté aux fines rainures de la broche comprenant un filetage fin à pas positif ou négatif, et en ce qu'il est prévu une cage pour maintenir la distance entre les corps de cylindres ou de rouleaux (3).

FIG. 1

FIG. 2

# FIG. 3a

# FIG. 3b